# EUROPEAN PATENT APPLICATION

(11) **EP 1 420 370 A1**
(43) Date of publication of application: **19.05.2004**
(21) Application number: 03078378.1
(22) Date of filing: 27.10.2003
(51) Int. Cl.: G07C 11/00

(54) **Communicating data relating to a site having one or more visitor destinations**

(30) Priority: 06.11.2002 GB 0225867; 06.11.2002 US 423990 P
(71) Applicant: Mymobiletimes Ltd, Harden Hewish, Chippenham SN14 6HN (GB)
(72) Inventor: Tapsell, David Leslie, Burbage, Marlborough SN8 3TY (GB); Nicholas, John Nigel Davies, Newton Abbott, Devon TQ13 0HX (GB); Monnery, Andrew William, Streatley, Berkshire RG8 9LJ (GB)
(74) Representative: Dunlop, Brian Kenneth Charles

(57) **Abstract**

A user is registered as a visitor to a site having one or more visitor destinations. After registration, the user is allowed to send and receive data relating to one or more of the visitor destinations (104) over a communications network (115). For example, a registered user may book an appointment at one of the destinations.

## Description

The present invention relates to communicating data relating to a site having one or more visitor destinations.

Many visitor-oriented sites, such as exhibitions, theme parks or museums etc, are being attended by increasingly high numbers of people. This can lead to lengthy queues and longer waiting times, which can reduce a visitor's enjoyment of the site. Visitors usually invest a great deal of their own time and effort to ensure the quality of their experience at a site but the operators of the site or visitor destinations within the site (e.g. exhibitors at a fair or ride owners at a theme park) may wish to try to enhance the quality of the experience for visitors. This can be difficult at present because individual visitors cannot easily communicate on an individual basis with the operators.

One proposed solution to the problems discussed above is given in GB 2307324. The system disclosed in that publication addresses the specific issue of queue management through the use of proprietary wireless equipment, docking stations and sequential codes. However, such a custom built system is only practical for permanent installations that can afford to install a bespoke system and the data that can be sent over the system is restricted to queuing related messages.

According to a first aspect of the present invention there is provided a method of allowing a user to send and receive data over a communications network, the data relating to a site having one or more visitor destinations, the method including steps of:
registering a user as a visitor to the site, and
allowing the registered user to send and receive data relating to one or more of the visitor destinations over the communications network.

The data sent by the registered user may include appointment request data representing a proposed time at which the user desires to visit a specified one of the visitor destinations. The method may further include a step of providing a schedule for at least some of the visitor destinations, the schedule including a set of time slots a said registered user may reserve to visit a said destination. The method can include a step of using the schedule to check if an appointment time requested by the registered user is available. The method can further include a step of sending appointment confirmation data to the registered user, the data representing a confirmation that the appointment requested by the user has been accepted. The appointment confirmation data may include an authorisation code, which may also be sent to a device associated with the visitor destination (that is the subject of the appointment). The method may further include a step of the registered user presenting the authorisation code to the visitor destination, and the device associated with the visitor destination may be used to verify the authorisation code.

The method can include a step of sending appointment unavailable data to the registered user, the data indicating that the appointment requested by the user has not been accepted. The appointment unavailable data may include data representing one or more alternative times at which the registered user can reserve to visit the destination.

The method may further include a step of sending the registered user appointment reminder data at a specific period before the appointment time. The method may further include a step of the registered user sending data including appointment cancellation data representing cancellation of an appointment.

The data sent by the registered user may include information request data representing a request for information relating to a said visitor destination identified in the request, or a product/offering identified in the request. The data sent by a registered user may include a purchase request.

The method may further include a step of sending data to all or some of the registered users at a particular time. The method may further include sending a said registered user data at a specific period before or after a said appointment time.

The method may further include a step of de-registering all or some of the registered users to indicate that the user(s) is/are no longer present at the site.

According to another aspect of the present invention there is provided a computer program product comprising a computer readable medium, having thereon:
a computer program code, when the program code is loaded, to make the computer execute a procedure to allowing a user to send and receive data over a communications network, the data relating to a site having one or more visitor destinations, the method including steps of:
   registering a user as a visitor to the site, and
   allowing the registered user to send and receive data relating to one or more of the visitor destinations over the communications network.

According to a further aspect of the present invention there is provided apparatus for allowing a user to send and receive data over a communications network, the data relating to a site having one or more visitor destinations, the apparatus including:
site communication apparatus including a registration component for registering a user as a visitor to the site using a communications network, and
a user communication device for allowing the registered user to send and receive data to the site communication system, the data relating to the one or more visitor destinations.

The network may include a cellular wireless network, a wireless local area network or the internet. The user communication device may include a device having a processor, memory, display and a component for communicating over the network. In one embodiment the user device includes a mobile telephone and data is transferred in the form of SMS messages. In other embodiments, data may be sent using other network technologies (possibly alone or in combination), e.g., MMS (Multimedia Messaging service) 3G (Third Generation), GPRS (General Packet Radio Service), WLAN (Wireless Local Area Network)/WiFi (Wireless Fidelity), Bluetooth (TM), Infra Red communication links, and the user device can include a palm device or an PDA (Personal Digital Assistant), etc. Those skilled in the art will appreciate that new network technologies developed in the future may also be usable. The site apparatus typically includes a data store, where at least some of the information transferred to/from the user device is stored.

According to yet another aspect of the present invention there is provided apparatus for allowing a user to send and receive data over a communications network, the data relating to a site having one or more visitor destinations, the apparatus including:
site communication apparatus including a registration component for receiving a registration request for registering a user as a visitor to the site using a communications network.

According to a further aspect of the present invention there is provided a method of allowing a user to arrange an appointment at a site having one or more visitor destinations over a communications network, the method including steps of:
registering a user as a visitor of the site, and
allowing a said registered user to send appointment request data over the network, the request including data representing a proposed time at which the user desires to visit a specified one of the visitor destinations, wherein the data is sent in the form of an SMS message.

Whilst the invention has been described above, it extends to any inventive combination of the features set out above or in the following description.

The invention may be performed in various ways, and, by way of example only, embodiments thereof will now be described, reference being made to the accompanying drawings, in which:-
Figure 1 illustrates schematically an embodiment of the system, and
Figure 2 illustrates schematically an example of steps that may performed during use of the system.

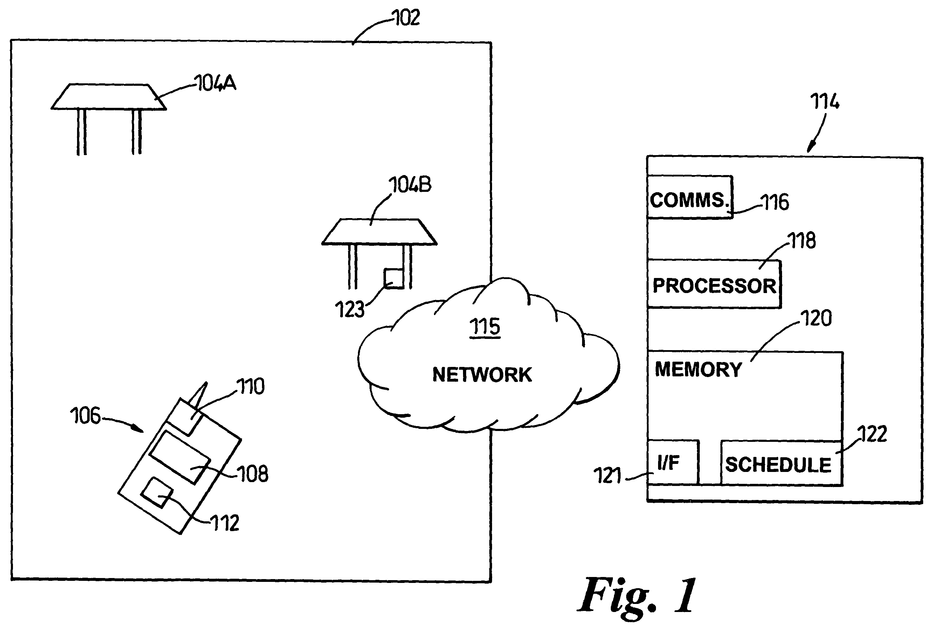

Figure 1 shows a site 102. It will be understood that "site" covers a variety of venues, and examples include (but are not limited to), a location used for a temporary event such as a festival or a trade/tourist exhibition, as well as more permanent sites such as theme parks, tourist resorts or museums. Although in Figure 1 the site 102 is shown as having a clear boundary and has a plurality of individual visitor destinations 104 within the site being relatively close to each other, it will be understood that the Figure is exemplary only and that the visitor destinations need not be located in a single well-defined geographical area. In the example, two visitor destinations 104A, 104B are shown, which may be two different rides in a theme park or locations in an exhibition for example.

Also shown in Figure 1 is a user communication device 106. The device 106 may be one of many existing devices, e.g. a mobile telephone, portable computer or a PDA (Personal Digital Assistant) with communication facilities. It will be apparent to those skilled in the art that devices developed in the future having similar capabilities may also be useable. Typically, the device is one that is already in the possession of a user before he visits the site, although the device 106 could be provided upon arrival at the site. Features normally included in the device 106 include a display 108, a component 110 for communicating over a network and processor/memory 112.

Figure 1 also shows a site data processing and communication apparatus 114. The apparatus 114 can take several forms, for example, a server connected to the communications network, and typically includes a communications interface 116, a processor 118 and a memory 120.

Although the apparatus 114 is shown as being remote from the site 102 in Figure 1, it will be appreciated that the actual physical location of the apparatus 114 is not of great significance (and the apparatus could in fact be distributed over a number of locations), as the apparatus is intended to communicate with devices in the site, e.g. the personal communication device 106, over a communications network (shown schematically as 115).

In the embodiments described below, the apparatus 114 is capable of communicating over a cellular wireless network and transfers data relating to the site 102 and, more particularly, the visitor destinations 104 in the form of SMS (Short Message Service) messages with a mobile telephone 106. However, other types of networks (e.g. wireless local area network) and data exchange (i.e. in forms other than SMS messages) could be utilised and data encryption and/or compression techniques could also be used. The memory 120 of the apparatus 114 includes code for allowing the apparatus to communicate over the network, as well as other data such as data relating to the devices 106 (and possibly their users). The memory 120 also includes code for an interface module 121 that is intended to allow operators/administrators of the apparatus 114 and/or visitors (potential or actual) to the site 102 to communicate with the apparatus 114. The memory 120 can further include data about all or some of the visitor destinations, e.g. destination appointment schedules 122. Further communication/data processing devices may also be associated with some or all of the visitor destinations, e.g. device 123 for destination 104B.

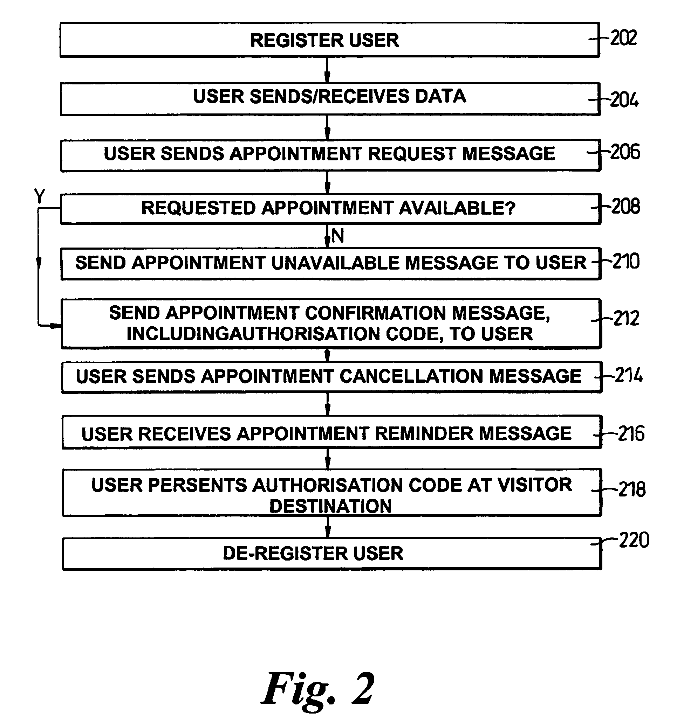

Turning to Figure 2, there is shown an example of steps that may be performed during use of the system. It will be appreciated that steps of Figure 2 are exemplary only and that the order, duration and repetition of many of the steps can vary depending on the way in which the user chooses to use the system.

At step 202 a user is registered as a visitor of the site 102. The way in which registration can take place may vary. For example, the user may send an SMS message to a number associated with the apparatus 114 requesting registration. In another embodiment registration involves the user providing information by means of a screen (e.g. web) based or paper based registration form. Data based on the information provided is then entered into the memory 120 for immediate or subsequent registration purposes. Such an arrangement can be used, for example, as a part of a registration process for an exhibition or during the purchase of tickets. The user may be contacted at a time determined by the site operators to confirm registration and also to remind the visitor of the benefits of the system. In yet another embodiment registration could be an activity that takes place automatically or "invisibly" as far as the user is concerned, e.g. when he first sends a message to the apparatus 114 using the device 106. Typically, registration will involve assigning the registered user an identifier (e.g. a code based on, for example, his telephone number or name). Alternatively, an identifier already stored on the device 106 may be noted by the apparatus 114 as becoming active.

In addition to a simple request for registration onto the system, users may be required (or may be given the option) to provide specific information about themselves. Examples of this type of additional information include an e-mail address, a physical address, payment details and personal information (e.g. gender, age). The provision of such additional information allows additional functionality to be enabled, such as the delivery of information to an e-mail address or the delivery of goods to a physical address or payment for goods. Registration will typically require the user to pay a fee, and the amount of the fee can determine the number/nature of facilities that are made available to the registered user (e.g. a gold/silver/bronze registered user type of system).

At step 204 data is transferred between the user device 106 and the apparatus 114. One example of this is a "welcome" message sent to the user device 106 following registration to confirm that his registration request has been received and accepted. Further examples of the types of messages that can be exchanged between the device 106 and the apparatus 114 will be discussed below.

Steps 206 to 218 relate to an example of messages exchanged when the visitor requests an appointment at one of the visitor destinations 104. It will be understood that such an appointment request is optional, depending on the planned activity of the user at the site. At step 206 the visitor uses his device 106 to send data representing an appointment request to the apparatus 114. It will be understood that the request data can vary in content and format but it will typically contain an identifier that it is an appointment request, an identifier for the visitor destination that is the subject of the request and an indication of the desired time of the appointment. The user making the request will also be identified, e.g. by including his identifier in the request data or by extracting his telephone number from the SMS message.

In more sophisticated embodiments, the personal communication device 106 may display a list of available time slots for each visitor destination 104. Such information may be derived from data transferred from the apparatus 114 to the device 106 at any time during or after registration, e.g. at preset intervals or whenever the schedule 122 is updated. This can also help the operators of the visitor destinations to manage the actions of visitors. For example, an operator of a particular visitor destination may limit appointment times to between, say, 10 a.m. and 1 p.m. Similarly, by only allowing appointments to be made at certain times, say, 8 a.m. to 10 a.m., reservations may be restricted to people present at the site early on in the day, thereby encouraging early arrival. In one embodiment, the appointment request data sent at step 206 includes the number of visitors be present at the appointment, thereby allowing group appointments to be made.

It will be apparent that the system can be adapted to facilitate further visitor management. For example, a number of places on a ride at a particular time can be reserved for visitors with appointments, whilst other visitors may gain entry to the visitor destination at that time by means of conventional physical queuing. In another embodiment only users that have made appointments may be allowed to attend a particular visitor destination at a particular time.

At step 208 the appointment request is received by the apparatus 114 and a check is performed to see whether or not the appointment requested is available. One way in which this check can be carried out involves the schedule 122. In a simple example, the schedule 122 takes the form of a look-up table representing a list of time slots, e.g. one hour periods between 9 a.m. and 5 p.m., for each of the visitor destinations 104. The apparatus 114 uses the desired time specified in the appointment request as a look-up key for the schedule 122. If the specified time slot is empty then this denotes that it is available and the schedule is updated accordingly, e.g. by entering an identifier for the user against the selected time slot. It will be appreciated that more complex data structures and search algorithms could be used.

If the check performed at step 208 indicates that the selected time slot has already been filled then at step 210 a message is sent to the user communication device 106 indicating that the requested appointment time is unavailable. In one embodiment, the apparatus 114 may check for the nearest available time slot for the specified visitor destination that is empty and details of this are included in the message sent at step 210. Alternatively, or additionally, the data may include details of one or more other visitor destinations that are available at (or around) the requested time, e.g. visitor destinations that are in close proximity or of a similar nature to the one specified in the appointment request.

If the check performed at step 208 indicates that the selected time slot is available then at step 212 a message is sent to the device 106 indicating that the appointment requested is available and that it has been set up. If a processor/communication device 123 is associated with the visitor destination then a message with details of the appointment set up may also be sent to that device.

The message(s) sent at step 212 can include an authorisation code. The code is intended to act as a substantially unique code used to access the visitor destination at the confirmed appointment time. The code may be retrieved from a store or generated in a (pseudo)random manner or by means of an algorithm, e.g. generating a code based on the time/date of the appointment (or when the appointment request was sent) and the identity of the user. The authorisation code can subsequently be presented as described in step 218 below.

It will be appreciated that the user can make several appointments using the system and that the apparatus 114 can be configured to ensure that a user does not make any appointments that overlap, or make appointments at destinations that are remote from each other at times that would not allow enough time to travel between the destinations. In the example steps of Figure 2, step 214 represents the user sending an appointment cancellation message to the apparatus 114. When the appointment cancellation message is received the schedule 122 is updated to indicate that the time slot/destination specified in the cancellation message is free and a confirmation message may be sent back to the device 106.

At step 216 the apparatus 114 sends an appointment reminder message to the user communications device 106. In one embodiment, such a reminder is sent at a predetermined period, e.g. thirty minutes, prior to an appointment. At step 218 the visitor keeps his appointment and presents the authorisation code sent to his device 106 at the visitor destination 104. In one embodiment, the presentation may simply involve the user showing the code to an attendant at the destination by retrieving a stored SMS message from the memory of the device 106. Alternatively, the user may send/forward a message containing the authorisation code to a communications and data processing device 123 associated with the destination 104, which has also received the code from the apparatus 114 and so can compare it with the one presented by the user. In this way, the code can act as part of an "electronic ticket" system.

At step 220 the user is deregistered from the system. In one example, the user may send a deregistration request to the apparatus 114 to signify that he no longer wishes to use the messaging system or that he is about to leave the site. In another embodiment deregistration occurs at a preset time and a message may be sent to the user device 106 that deregistration will take place. Another example of when deregistration can take place is if a registered user abuses the system (e.g. by not turning up to an appointment that he has not cancelled) or if a predetermined maximum number of messages has already been sent using the system.

Further examples of messages that may be transferred between the user device 106 and the apparatus 114, e.g. at step 204, will now be described. In general, such messages can be classified as "Activity Based" (i.e. ones that are sent to a particular registered user based on information indicating the location of a registered user at a particular time, typically derived from appointment data); "Time Based" (i.e. messages sent to all or some registered users at predetermined times) and "Time/Location Independent" (i.e. messages that may be sent to or from the user device 106 under various circumstances).

An example of an "Activity Based" message includes the sending of messages relating to products available for purchase by the user. Information held in the system relating to the visitor can be used (e.g. offers for a "I rode the big dipper" tee-shirt being sent twenty minutes after the visitor had scheduled an appointment for that ride or "book a follow-up appointment soon" after the visitor had scheduled an appointment). It will be further appreciated that the additional information provided by the user can also be used, e.g. age/gender information being used to suggest a suitable size/colour of a garment. Another example includes special offers such as discounts for a particular visitor destination, e.g. as an encouragement for a free (i.e. not currently attending an appointment) visitor to attend a destination at an off-peak time, or as an offer for refreshments in an interval between appointments. Examples of a "Time Based" message are; a warning that a particular visitor destination or the entire site is about to close in, say, one hour, or an offer to take lunch early to avoid the rush.

An example of a "Time/Location Independent" message includes an information request message by the user using the device 106 for further details regarding a particular visitor destination. Another example of this type of message is an alert sent by a site operator using apparatus 114, e.g. an alert that a missing child has been reported.

Messages sent by the user can include requests for information about a specific product (e.g. an article being demonstrated at an exhibition stand), or a request to purchase a product. The additional information (e.g. home address and payment details) provided at registration can be used for this purpose. In one embodiment a display may be provided at a visitor destination that shows a code, e.g. a number relating to an item currently being demonstrated, which can be used in a purchase/information request message. Such a code display can be updated as different items as shown to the visitors and previous codes can be invalidated, e.g. to ensure no more requests for sold-out items are processed.

It will be appreciated that the data exchanged between the device 106 and the apparatus 114 need not be confined to text-based data if the network and hardware are capable of exchanging other forms of data. For example, visitors at a visitor attraction could take photographs of the attraction using a mobile device and transfer it to the apparatus 114 to enter it into a competition. Other multimedia data could also be exchanged. For example, the data may relate to interactive games (playable using the user device 106) or "points" for a loyalty scheme.

In one embodiment the interface module 121 provides an interface for operators of the apparatus 114 to control various aspects of the system. It will be understood that the interface can be accessed directly on the server that constitutes the apparatus 114 or the interface could be accessed via a remote terminal over a communications network, e.g. a World Wide Web-based interface. The interface may be used to create/edit/delete message (such as the ones discussed above) to be sent to all or specific registered users. The interface can also be used to generate management reports (e.g. statistics about number of messages sent, error reports, etc) as well as setting various criteria within the system (e.g. the maximum number of appointments allowable for gold/silver/bronze types of registered users, setting the period before an appointment when a reminder message is to be sent, or switch reminder messages on/off).

In one embodiment the interface 121 can also be accessed by other users. The users can use the interface for registration purposes and/or registered users can use it to make appointments prior to their actual visit, for example.

An example of a coding scheme that may be used when SMS messages are used to transfer data between the user communication device 106 and the apparatus 114 is given below. The coding example below is particularly suitable where the visitor site is an exhibition, but it will be appreciated that other coding schemes can be developed that are suitable for other types of visitor sites.
- Reg01: - register on system at site 01
- Dereg01: - deregister from system at site 01
- REx@y.com: - register e-mail address (x@y.com)
- RP.rg81aa.1: - register physical delivery address (house no.1 postcode rg8 1aa)
- L001: - request information about product 001 to mobile device
- E002: - request information about product 002 to e-mail address
- D003: - book alert for start of demo 003 to mobile device
- A004.1000: - request appointment with company/visitor destination 004 at 10.00 am
- A004.e: - request earliest available appointment with company/visitor destination 004
- A004.e.3: - request earliest available appointment with company/visitor destination 004 with 3 visitors
- A004.c: - cancel scheduled appointment with company 004
- P005.001: - purchase product 001 from company 005

The codes for sites, visitor destinations, products, etc may be given on literature, websites, or displayed on actual products/visitor destinations at the site. Bar codes could also be used if reader devices capable of communicating with other devices are provided.

The embodiments described above provide a system that allows a great range of site-specific information to be transferred between a visitor and site/visitor destination operators. The ability to collect further information about the visitor allows post-visit marketing opportunities and gives the operators opportunities to build up a profile of their visitors. The system also benefits users as they can receive more detailed information without having to seek out a visitor information point. As the system can be implemented using cheap and commonplace hardware (e.g. mobile telephones and personal computers), it can be installed and run at relatively low cost at virtually any site. Traffic on the communications network can also be increased, leading to increased revenue opportunities. In one embodiment sending some or each user generated message can incur a charge. In other embodiments charging is achieved through a prepaid off-line charging mechanism, a post-paid charging mechanism or a combination of all of these methods.

## Claims

1. A method of allowing a user to send and receive data over a communications network (115), the data relating to a site (102) having one or more visitor destinations (104), the method including steps of:
registering (202) a user as a visitor to the site, and
allowing the registered user to send (204) and receive (216) data relating to one or more of the visitor destinations over the communications network.

2. A method according to Claim 1, wherein the data sent by the registered user includes appointment request data representing a proposed time at which the user desires to visit a specified one of the visitor destinations (104).

3. A method according to Claim 1 or 2, further including a step of providing a schedule for at least some of the visitor destinations (104), the schedule including a set of time slots a said registered user can reserve to visit a said destination.

4. A method according to Claim 3, including a step of using the schedule to check if an appointment time requested by the registered user is available at the destination (104).

5. A method according to any one of Claims 2 to 4, further including a step of sending (212) appointment confirmation data to the registered user, the data representing a confirmation that the appointment requested by the user has been accepted.

6. A method according to Claim 5, wherein the appointment confirmation data includes an authorisation code that is also sent to a device (123) associated with the visitor destination (104) that is the subject of the appointment.

7. A method according to Claim 6, further including a step of the registered user presenting the authorisation code at the visitor destination (104), and a device (123) associated with the visitor destination being used to verify the authorisation code.

8. A method according to any one of Claims 2 to 7, further including a step of sending (210) appointment unavailable data to the registered user, the data indicating that the appointment requested by the user has not been accepted.

9. A method according to Claim 8, wherein the appointment unavailable data includes data representing one or more alternative times at which the registered user can reserve to visit the specified destination (104).

10. A method according to Claim 8 or 9, wherein the appointment unavailable data includes data representing one or more other said visitor destinations (104) that are available at the proposed time.

11. A method according to any one of Claims 2 to 10, further including a step of sending (216) the registered user appointment reminder data at a specific period before the appointment time.

12. A method according to any one of Claims 2 to 11, further including a step of the registered user sending data including appointment cancellation data representing cancellation of an appointment.

13. A method according to any one of Claims 1 to 12, wherein the data sent by the registered user includes information request data representing a request for information relating to a said visitor destination (104) identified in the request, or a product/offering identified in the request.

14. A method according to any one of the preceding Claims, wherein the data sent by a registered user includes a purchase request.

15. A method according to any one of the preceding Claims, further including a step of sending data to all or some of the registered users at a particular time.

16. A method according to any one of the preceding Claims, further including a step of sending a said registered user data at a specific period before or after a said appointment time.

17. A method according to any one of the preceding Claims, further including a step (220) of de-registering all or some of the registered users to indicate that the user is no longer present at the site.

18. A method according to any one of the preceding Claims, wherein at least some of the data transferred in the form of an SMS message.

19. A computer program product comprising a computer readable medium, having thereon:
a computer program code, when the program code is loaded, to make the computer execute a procedure to allowing a user to send and receive data over a communications network (115), the data relating to a site (102) having one or more visitor destinations (104), the method including steps of:
registering (202) a user as a visitor to the site, and
allowing the registered user to send (204) and receive (216) data relating to one or more of the visitor destinations over the communications network.

20. Apparatus for allowing a user to send and receive data over a communications network (115), the data relating to a site (102) having one or more visitor destinations (104), the apparatus including:
site communication apparatus (121) including a registration component (118, 120) for registering a user as a visitor to the site using a communications network, and
a user communication device (106) for allowing the registered user to send and receive data to the site communication system, the data relating to the one or more visitor destinations.

21. Apparatus according to Claim 20, wherein the network (115) includes a cellular wireless network, a wireless local area network or the internet.

22. Apparatus according to Claim 20 or 21, wherein the user device (106) includes a mobile telephone and data is transferred in the form of SMS messages.
